# FASCICULE DE BREVET EUROPEEN

(11) **EP 1 147 027 B1**
(45) Date de publication et mention de la délivrance du brevet: **26.12.2007**
(21) Numéro de dépôt: 00900455.7
(22) Date de dépôt: 11.01.2000
(51) Int. Cl.: B60L 3/00, B60L 7/06

(54) **PROCEDE ET DISPOSITIF DE PROTECTION DES CONVERTISSEURS**
VERFAHREN UND VORRICHTUNG ZUM SCHUTZ VON UMRICHTERN
METHOD AND DEVICE FOR PROTECTING CONVERTERS

(30) Priorité: 19.01.1999 EP 99870008
(43) Date de publication de la demande: 24.10.2001
(73) Titulaire: ALSTOM BELGIUM S.A., 6001 Charleroi (BE)
(72) Inventeur: COLASSE, Alexis, B-5100 Jambes (BE); MASSELUS, Jean-Emmanuel, B-6032 Mont-sur-Marchienne (BE)
(74) Mandataire: Blot, Philippe Robert Emile
(86) Numéro de dépôt international: PCT/BE2000/000002
(87) Numéro de publication internationale: WO 2000/043231

(56) Documents cités:
- EP-A- 0 857 605
- DE-A- 19 537 526
- HORIE A ET AL: "IGBT INVERTER SYSTEM FOR ROLLING STOCK" HITACHI REVIEW, vol. 46, no. 2, 1 avril 1997 (1997-04-01), pages 57-60, XP000736001
- ERNST G ET AL: "ELEKTRISCHE AUSRUESTUNG DER TRIEBZUEGE BAUREIHE 481/482 FUER DIE S -BAHN BERLIN" ELEKTRISCHE BAHNEN, vol. 95, no. 5, 1 mai 1997 (1997-05-01), pages 111-122, XP000734493

## Description

### Objet de l'invention

La présente invention se rapporte tout d'abord à un procédé qui présente une fonction de protection en tension d'un convertisseur et une fonction de hachage de freinage dans une chaîne de propulsion.

La présente invention se rapporte également au dispositif pour la mise en oeuvre de ce procédé.

### Arrière-plan technologique à la base de l'invention

De manière classique, les moteurs électriques de propulsion tels que les moteurs synchrones, asynchrones ou même continus sont équipés d'un convertisseur. Un exemple de convertisseur est l'onduleur de tension, qui permet de fournir une tension alternative à partir d'une tension- continue prise à la caténaire. En effet, pour fournir de l'énergie à la charge constituée par les moteurs électriques de propulsion qui sont généralement triphasés, il est nécessaire de proposer un système triphasé en tension le plus proche possible d'un système triphasé sinusoïdal équilibré, variable en fréquence et en amplitude. L'onduleur est un dispositif qui permet d'atteindre ce but, et qui utilise en général des composants de puissance tels que des thyristors, des GTO, etc.

Jusqu'à présent, les semi-conducteurs qui sont employés comme interrupteurs dans les convertisseurs et en particulier dans les onduleurs autorisent une tension de tenue importante vis-à-vis de la tension du réseau caténaire.

Dans le cas particulier d'une tension caténaire de 3 kV continue nominale, on propose d'utiliser par exemple deux GTO de 4.5 kV en série. On obtient ainsi une marge de sécurité importante permettant de soutenir la tension aux bornes de l'onduleur dans tous les cas de fonctionnement.

En outre, s'il se produit un blocage du convertisseur, dû par exemple à une surtension caténaire, on observe une surtension momentanée particulièrement importante à l'entrée du convertisseur. Cette surtension dépend essentiellement des paramètres du convertisseur lui-même, du filtre d'entrée, de la coupure éventuelle du courant et de la ligne caténaire elle-même.

Depuis quelque temps sont apparus de nouveaux types d'interrupteurs statiques. Parmi ceux-ci, on peut citer les "IGBT" (Insulated Gate Bipolar Transistor), les MGT, les IGCT, ... De manière générale, ces dispositifs peuvent, s'affranchir de l'utilisation de dispositifs d'aide à la commutation (snubber), étant donné que la commande s'effectue par la gâchette.

En particulier, depuis que l'on utilise des semi-conducteurs de cette nouvelle génération et en particulier dans le cas des IGBT, on peut autoriser une tenue en tension maximale réduite. En effet, il suffit de placer deux IGBT de 3.3 kV en série dans le cas d'une tension caténaire de 3 kV continue nominale. Ceci signifie que la marge de sécurité en tension est dès lors aussi réduite, et de ce fait, il est nécessaire d'utiliser un dispositif de protection permettant d'écrêter la tension du filtre d'entrée du convertisseur afin de garantir que la tension maximale aux bornes des semi-conducteurs ne dépasse jamais leur valeur maximale. Le principe de tels systèmes de protection est particulièrement simple, et prévoit que lorsque la tension dépasse un seuil maximal, le dispositif de protection s'enclenche et ne se déclenchera que lorsque la tension repassera sous un seuil minimum. Néanmoins, la nécessité de placer un dispositif de protection par écrêtage de tension entraîne également l'utilisation d'un dispositif de consommation de puissance à l'entrée du convertisseur, et en pratique des résistances.

Habituellement, les convertisseurs de propulsion sont équipés, outre le filtre d'entrée disposé en amont du convertisseur, dans certains cas particuliers, d'un hacheur de freinage.

Le document "IGBT inverter system for rolling stock" au nom de Horie A. et al. décrit le fonctionnement classique d'un hacheur de freinage qui sert aussi de dispositif de protection de surtension.

Le document "Elektrische Ausrüstung der Triebzüge Baureihe 481/482 für die S-Bahn Berlin' elektrische Bahnen" au nom de Ernst G. et al ne décrit pas le fonctionnement de protection contre des surtensions provenant du réseau. Dans cette application, il est fort probable que la surtension soit reprise par les semi-conducteurs, étant donné qu'il s'agit de semi-conducteurs de type GTO.

### Buts de l'invention

La présente invention vise à proposer l'utilisation d'interrupteurs de la nouvelle génération tels que des IGBT pour des convertisseurs tout en prévoyant un dispositif de protection.

En outre, la présente invention vise également à proposer une installation destinée à mettre en oeuvre le procédé, permettant une utilisation rationnelle des équipements de contrôle du freinage et de protection contre les surtensions à l'entrée du convertisseur alimentant les moteurs.

### Principaux éléments caractéristiques de l'invention

La présente invention se rapporte à une installation destinée à permettre l'alimentation d'un moteur de propulsion suivant la revendication 3.

D'autres caractéristiques sont énoncées dans les revendications 4 à 9.

La présente invention se rapporte également au procédé d'alimentation d'un moteur de propulsion suivant la revendication 1.

D'autres caractéristiques sont énoncées dans la revendication 2.

### Brève description des figures

- La figure 1: représente le schéma de principe de la chaîne de propulsion comprenant les différents modules et circuits de puissance tels que circuit d'entrée, filtre d'entrée, hacheur de freinage, onduleur et moteur électrique de propulsion dans le cas d'une utilisation d'interrupteurs selon l'état de la technique.
- La figure 2: représente le schéma de principe d'un hacheur de freinage dans le cas d'une utilisation d'interrupteurs de la nouvelle génération tels des IGBT.
- La figure 3: représente le schéma de principe d'un dispositif de protection fonctionnant par écrêtage nécessaire lors d'une utilisation d'interrupteurs de la nouvelle génération tels des IGBT dans la chaîne de propulsion telle que représentée à la figure 1.
- La figure 4: représenté le schéma de principe de la solution proposée selon la présente invention combinant les fonctions de hacheur de freinage et d'écrêteur de tension.
- Les figures 5 et 6: représentent les principes de commande respectivement du hacheur de freinage et de l'écrêteur de tension.

### Description détaillée d'une forme d'exécution préférée de la présente invention

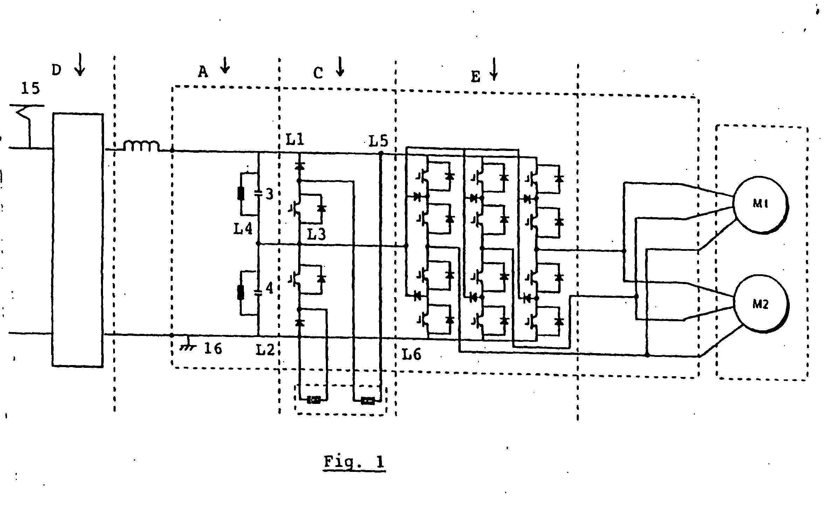

A la figure 1, on a représente la chaîne complète de propulsion de deux moteurs de propulsion M1 et M2. Selon la forme d'exécution représentée à la figure 1, en amont de ces moteurs triphasés de propulsion M1 et M2, est disposé un onduleur trois niveaux classique E à trois branches pour alimenter les trois phases R, S, T desdits moteurs, un hacheur de freinage C et un filtre d'entrée A lui-même directement relié par l'intermédiaire d'un circuit d'entrée O à la caténaire 15 de 3000 V et au rail 16. De manière classique, les différents composés des dispositifs de puissance sont des GTO qui ne nécessitent pas l'utilisation d'un dispositif supplémentaire de protection de tension (écrêteur).

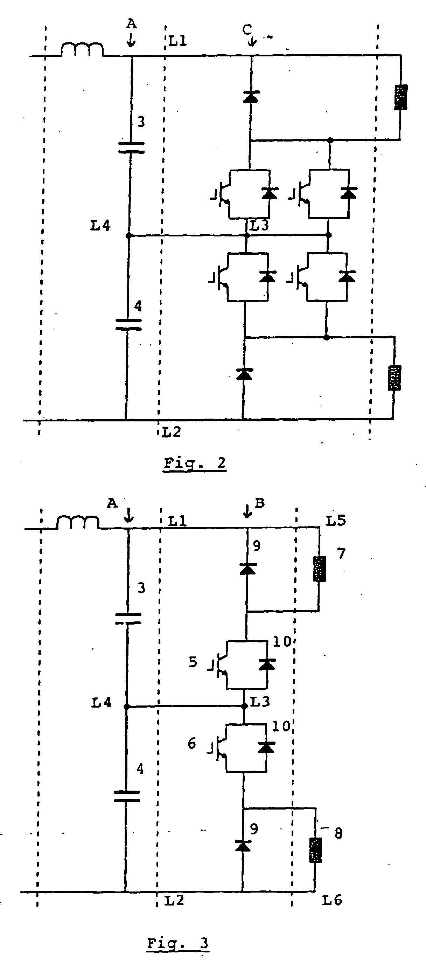

Dans le cas d'une utilisation d'interrupteurs de la nouvelle génération comme des IGBT, il est nécessaire d'utiliser dans le cas d'une caténaire à 3000 V dans chacune des branches deux transistors IGBT afin de tenir la puissance. Dans ce cas, les deux transistors IGBT sont disposés en parallèle et sont eux-mêmes en série sur une résistance de freinage. Ainsi que déjà mentionné précédemment, il est nécessaire d'y adjoindre un dispositif de protection tel que représenté à la figure 3, permettant l'écrêtage de la tension du filtre d'entrée et du convertisseur. De manière classique, chaque branche se compose d'un interrupteur IGBT lui-même en série sur une diode et une résistance d'écrêtage en parallèle.

En pratique, on observe qu'en cas de freinage, lorsque la tension entre les points L1 (connecté à la caténaire via le filtre d'entrée) et le point L2 (en connexion avec les rails) devient supérieure à un seuil, ce qui signifie que la ligne ne peut plus récupérer l'énergie de freinage, on limite la tension sur les condensateurs 3 et 4 en activant les semi-conducteurs de contrôle 5 et 6. Ceux-ci dérivent le courant vers les résistances de hachage 7 et 8.

Le point intermédiaire L3 entre les semi-conducteurs 5 et 6 est connecté au point intermédiaire L4 entre les condensateurs 3 et 4 du filtre d'entrée A.

Le hacheur de freinage B équipant la majorité des convertisseurs de traction est dimensionné pour une puissance importante.

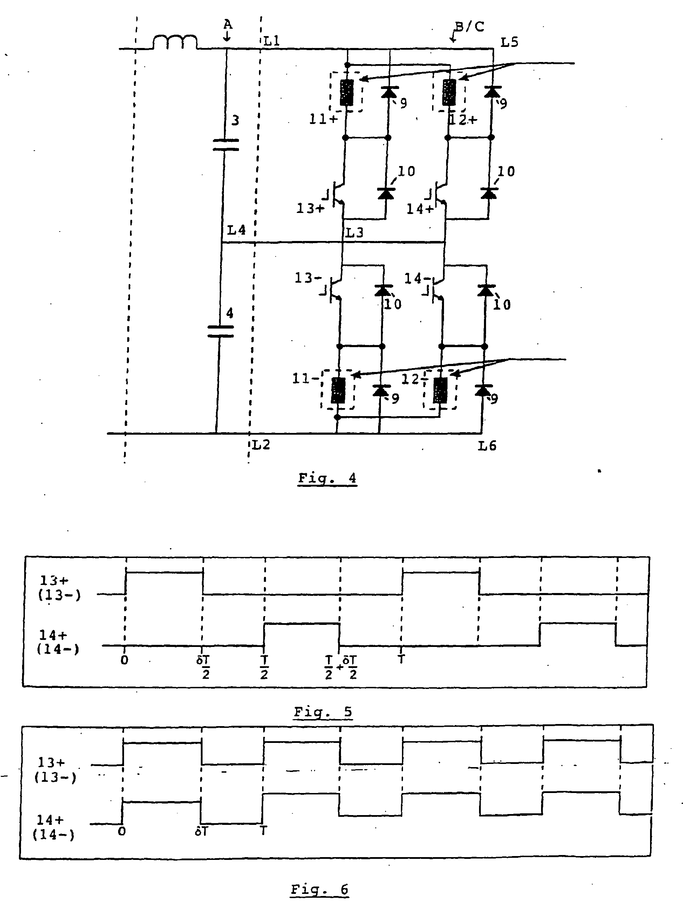

Afin de diminuer les coûts, il est proposé une solution telle que représentée à la figure 4, qui combine les fonctions de hacheur de freinage et d'écrêteur de tension au sein d'un seul et même dispositif de puissance.

A cette fin, les résistances 7 et 8 sont dédoublées en 11+, 12+, 11- et 12-. Les semi-conducteurs IGBT qui alimentent les résistances, en série avec celles-ci, sont également dédoublés : 13+, 14+, 13- et 14-. Malheureusement, le dimensionnement du dispositif devant agir comme écrêteur impose une résistance d'écrêtage faible pour générer un courant assez important en vue d'une bonne protection en tension des semi-conducteurs de l'écrêteur et de l'onduleur (non représenté aux figures 2 et 4), qui doit être raccordé aux bornes L5 et L6.

Or, l'emploi d'une résistance faible convenant à l'écrêtage conduirait à un courant trop important, donc à des pertes exagérées dans le dispositif lorsqu'il fonctionne comme hacheur de freinage.

Selon la présente invention, la solution consiste à actionner en alternance le courant parcourant les résistances lorsqu'elles sont utilisées pour la fonction de hachage de freinage.

Lorsque le hacheur de freinage C fonctionne comme écrêteur de tension, la puissance thermique à dissiper au niveau des résistances est moins grande, car le temps de fonctionnement est court. Dans ce cas, les paires de semi-conducteurs de contrôle 13+ et 14+, et 13- et 14-, sont commandées simultanément et les résistances 11+ et 12+, et 11- et 12- sont alimentées en parallèle, si bien que la résistance équivalente entre les points L1 et L2 est la moitié de la résistance équivalente obtenue lors du fonctionnement en hacheur de freinage.

Il y a lieu de remarquer que, pour un effet donné comme hacheur de freinage, la résistance n'est pas surdimensionnée. Elle est simplement constituée en deux parties séparées.

L'invention permet de réduire la fréquence de commutation des semi-conducteurs fonctionnant en hacheur de freinage sans modifier la fréquence sur les condensateurs du filtre d'entrée. On réduit ainsi les pertes par commutation en hacheur de fréquence.

Ceci permet donc de bénéficier des avantages du mode de fonctionnement alterné (par entrelacement).

De plus, les pertes par conduction ne sont pas augmentées : par suite du doublement de la résistance alimentée par chaque semi-conducteur de contrôle, le courant qu'il conduit est réduit de moitié, mais ce courant est conduit deux fois en raison de l'alternance du fonctionnement des semi-conducteurs de contrôle.

Par contre, lors du fonctionnement en écrêteur de tension, la résistance équivalente est réduite de moitié, ce qui permet une protection en tension efficace grâce à un courant double.

Le principe de fonctionnement en hacheur de freinage est décrit par le diagramme de la figure 5 relatif (à titre d'exemple) aux semi-conducteurs de contrôle 13+ et 14+ qui agissent en alternance. Durant une période de temps T, 13+ agit durant un temps δT/2 démarrant au temps 0 et 14+ agit durant le même temps δT/2 qui démarre au moment T/2. La durée δT/2 est déterminée selon l'importance de l'effet de hachage à réaliser, c'est-à-dire de la puissance à dissiper.

Par contre, le diagramme de la figure 6 montre l'action simultanée, à chaque période T, des semi-conducteurs 13+ et 14+ durant un temps δT lorsqu'ils fonctionnent comme écrêteurs de tension.

Selon la présente invention, l'écrêtage doit intervenir lorsque la tension dépasse le seuil maximal de tenue des semi-conducteurs du hacheur de freinage C et/ou de l'onduleur E, à cause d'une surtension sur la caténaire 15 ou d'un blocage de l'onduleur, notamment.

Dans ce cas, le dispositif électronique de commande bloque l'onduleur de traction E et le fonctionnement en écrêteur est enclenché, même s'il n'y a pas de demande d'intervention comme hacheur de freinage.

L'écrêteur dérive le courant sur les résistances disposées alors en parallèle en s'allumant sur un seuil haut et en s'éteignant à un seuil bas de manière à maintenir la tension en dessous d'une valeur maximale, tension de tenue avec sécurité des semi-conducteurs. C'est le temps écoulé entre les passages par ces deux seuils qui détermine la durée δT (voir figure 6). Si ce fonctionnement dépasse une urée déterminée, une sécurité supplémentaire assure l'ouverture du disjoncteur caténaire inséré dans le circuit d'entrée D.

De manière avantageuse, on a prévu d'utiliser des dispositifs qui ne nécessitent pas de reconfiguration par contacteur, l'électronique permettant cette reconfiguration automatique.

L'exemple d'exécution écrit précédemment se base sur l'utilisation d'un onduleur trois niveaux. Il est bien entendu que l'application du procédé à un onduleur deux niveaux pourrait s'effectuer sans difficulté par l'homme de l'art et n'est pas exclue de la présente invention.

## Revendications

1. Procédé d'alimentation d'un moteur de propulsion se présentant sous la forme d'une charge (M) au départ d'un réseau continu constituant la source par l'intermédiaire d'un convertisseur (E), de moyens de protection des surtensions par écrêtage (B) comprenant des résistances destinées à dériver l'excès de tension et d'un hacheur de freinage (C) comprenant des résistances de freinage destinées à dériver le courant de freinage, chaque résistance étant connectée en série avec un semi-conducteur distinct, et dans lequel on utilise les mêmes résistances (11+, 12+, 11- et 12-) comme moyens de protection des surtensions par écrêtage et comme résistances de freinage, **caractérisée en ce que** les résistances sont disposées dans des circuits séparés placés en parallèle et **en ce que** l'on commande les semi-conducteurs de contrôle (13+, 14+, 13- et 14-) desdites résistances (11+, 12+, 11- et 12-), de manière alternée lors du freinage et de manière simultanée lors de l'écrêtage.

2. Procédé d'alimentation selon la revendication 1, **caractérisé en ce que** l'on commande lesdits semi-conducteurs de contrôle (13+, 14+, 13- et 14-) desdites résistances (11+, 12+, 11- et 12-) sur le mode d'un fonctionnement alterné par entrelacement-.

3. Installation destinée à permettre l'alimentation d'un moteur de propulsion se présentant sous la forme d'une charge- (M) au départ d'un réseau continu-constituant la source par l'intermédiaire d'un convertisseur (E), de moyens de protection des surtensions par écrêtage (B) comprenant des résistances destinées à dériver l'excès de tension et d'un hacheur de freinage (C) comprenant des résistances de freinage destinées à dériver le courant de freinage, chaque résistance (11+, 12+, 11- et 12-) étant connectée en série avec un semi-conducteur de contrôle (13+, 14+, 13- et 14-) distinct, les résistances des moyens de protection des surtensions par écrêtage et les résistances de freinage étant les mêmes résistances (11+, 12+, 11- et 12-) **caractérisée en ce que** les résistances sont disposées dans des circuits séparés placés en parallèle et **en ce que** les semi-conducteurs de contrôle (13+, 14+, 13- et 14-) desdites résistances agissent sur lesdites résistances de manière à ce qu'elles soient alimentées de manière alternée lors du freinage et de manière simultanée lors de l'écrêtage.

4. Installation selon la revendication 3, **caractérisée en ce que** lesdites résistances (11+, 12+, 11- et 12-) sont connectées en série avec des semi-conducteurs (13+, 14+, 13- et 14-) contrôlant le courant dans le sens direct, c'est-à-dire du pôle positif (L1) vers le pôle négatif (L2).

5. Installation selon l'une quelconque des revendications 3 ou 4, **caractérisée en ce que** chacune desdites résistances (11+, 12+, 11- et 12-) est connectée en parallèle avec une diode (9 ou 10) interdisant le courant direct, c'est-à-dire du pôle positif (L1) vers le pôle négatif (L2).

6. Installation selon l'une quelconque des revendications 3 à 5, **caractérisée en ce que** le convertisseur (E) est un convertisseur à deux niveaux.

7. Installation selon l'une quelconque des revendications 3 à 5, **caractérisée en ce que** le convertisseur (E) est un convertisseur à trois niveaux, avec un niveau relié à un point intermédiaire (23) du réseau continu.

8. Installation selon la revendication 7, **caractérisée en ce que** les résistances (11+, 12+, 11- et 12-) comprennent un premier groupe de résistances (11+, 12+) entre le pôle positif (L1) du réseau et le point intermédiaire (L3) du réseau, et un second groupe de résistances (11-, 12-) entre le pôle négatif (L2) du réseau et le point intermédiaire (L3) du réseau.

9. Installation selon la revendication 7 ou 8, **caractérisée en ce que**, au point intermédiaire (L3) dudit réseau continu, sont raccordés au moins deux semi-conducteurs de contrôle (13+, 14+, 13- et 14-) connectés chacun à au moins une résistance (11+, 12+, 11- et 12-), les résistances étant raccordées par paires aux deux pôles du réseau (L1 et L2).

## Claims

1. Electrical power supply method for a drive motor in the form of a load (M) at the start of a continuous network constituting the source by means of a converter (E), means for protection from excess voltages by means of peak limiting (B) comprising resistors which are intended to branch off the voltage excess and a braking chopper (C) comprising braking.resistors which are intended to branch off the braking current, each resistor being connected in series with a separate semi-conductor and in which the same resistors (11+, 12+, 11- and 12-) are used as means for protection from excess voltages by means of peak limiting and as braking resistors, **characterised in that** the resistors are arranged in separate circuits which are positioned in parallel and **in that** the control semi-conductors (13+, 14+, 13- and 14-) of the resistors (11+, 12+, 11- and 12-) are controlled in an alternating manner during the braking operation and in a synchronous manner during the peak limiting operation.

2. Electrical power supply method according to claim 1, **characterised in that** the control semi-conductors (13+, 14+, 13- and 14-) of the resistors (11+, 12+, 11- and 12-) are controlled in the mode of alternating operation by means of interlacing.

3. Installation intended to allow the electrical power supply for a drive motor in the form of a load (M) at the start of a continuous network constituting the source by means of a converter (E), means for protection from excess voltages by means of peak limiting (B) comprising resistors which are intended to branch off the voltage excess and a braking chopper (C) comprising braking resistors which are intended to branch off the braking current, each resistor (11+, 12+, 11- and 12-) being connected in series with a separate control semi-conductor (13+, 14+, 13- and 14-), the resistors of the means for protection from excess voltages by means of peak limiting and the braking resistors being the same resistors (11+, 12+, 11- and 12-), **characterised in that** the resistors are arranged in separate circuits which are positioned in parallel and **in that** the control semi-conductors (13+, 14+, 13- and 14-) of the resistors act on those resistors in such a manner that they are supplied with electrical power in an alternating manner during the braking operation and in a synchronous manner during the peak limiting operation.

4. Installation according to claim 3, **characterised in that** the resistors (11+, 12+, 11- and 12-) are connected in series with semi-conductors (13+, 14+, 13- and 14-) controlling the current in the forward direction, that is to say, in the direction from the positive pole (L1) towards the negative pole (L2).

5. Installation according to any one of claims 3 or 4, **characterised in that** each of the resistors (11+, 12+, 11- and 12-) is connected in parallel with a diode (9 or 10) preventing direct current, that is to say, in the direction from the positive pole (L1) towards the negative pole (L2).

6. Installation according to any one of claims 3 to 5, **characterized in that** the converter (E) is a two-stage converter.

7. Installation according to any one of claims 3 to 5, **characterized in that** the converter (E) is a three-stage converter, with one stage connected to an intermediate point (L3) of the network.

8. Installation according to claim 7, **characterized in that** the resistors (11+, 12+, 11- and 12-) comprise a first group of resistors (11+, 12+) between the positive pole (L1) of the network and the intermediate point (L3), and a second group of resistors (11-, 12-) between the negative pole (L2) of the network and the intermediate point (L3).

9. Installation according to claim 7 or 8, **characterised in that**, at the intermediate point (L3) of the continuous network, there are connected at least two control semi-conductors (13+, 14+, 13- and 14-) which are each connected to at least one resistor (11+, 12+, 11- and 12-), the resistors being connected in pairs to the two poles of the network (L1 and L2).

## Patentansprüche

1. Verfahren zur Versorgung eines Antriebsmotors in der Form einer Ladung (M) aus einem Gleichstromnetz, das die Versorgungsquelle über einen Umrichter (E) bildet, wobei Mittel zum Schutz gegen Überspannungen durch Kappung (B) Widerstände umfassen, die bestimmt sind, übermäßige Spannung abzuleiten, mit einem Zerhacker, der Bremswiderstände aufweist, die bestimmt sind, den Bremsstrom abzuleiten, wobei jeder Widerstand in Reihe verbunden ist mit einem bestimmten Halbleiter, wobei man dieselben Widerstände (11+, 12+, 11- und 12-) als Schutzmittel gegen Überspannungen durch Kappung und als Bremswiderstände benutzt, **dadurch gekennzeichnet, dass** die Widerstände in getrennten parallelen Schaltungen angeordnet sind und dass die Steuer-Halbleiter (13+, 14+, 13- und 14-) der Widerstände (11+, 12+, 11- und 12-) so gesteuert werden, dass sie abwechselnd bei der Bremsung und gleichzeitig bei der Kappung wirksam werden.

2. Verfahren zur Versorgung gemäß Anspruch 1, **dadurch gekennzeichnet, dass** die Steuer-Halbleiter (13+, 14+, 13- und 14-) der Widerstände (11+, 12+, 11- und 12-) alternierend gesteuert werden.

3. Installation zur Versorgung eines Antriebsmotors in Form einer Ladung (M) aus einem Gleichstromnetz als Versorgungsquelle über einen Umrichter (E), wobei ein Schutzmittel gegen Überspannungen durch Kappung Widerstände umfaßt, die bestimmt sind, überschüssige Spannung abzuleiten, und einen Bremszerhacker (C) mit Bremswiderständen umfassen, die bestimmt sind, den Bremsstrom abzuleiten, wobei jeder Widerstand (11+, 12+, 11- und 12-) verbunden ist in Reihe mit einem bestimten

4. Installation gemäß Anspruch 3, **dadurch gekennzeichnet, dass** die Widerstände (11+, 12+, 11- und 12-) in Reihe verbunden sind mit den Halbleitern (13+, 14+, 13- und 14-), die den Strom in direkter Richtung steuern, d.h. vom positiven Pol (L1) zum negativen Pol (L2).

5. Installation gemäß einem der Ansprüche 3 oder 4, **dadurch gekennzeichnet, dass** jeder der Widerstände (11+, 12+, 11- und 12-) parallel verbunden ist mit einer Diode (9 oder 10), die den direkten Strom unterdrückt, d.h. den Strom vom positiven Pol (L1) zum negativen Pol (L2).

6. Installation gemäß einem der vorhergehenden Ansprüche 3 bis 5, **dadurch gekennzeichnet, dass** der Umrichter (E) ist ein zwei Phasen Umrichter.

7. Installation gemäß einem der vorhergehenden Ansprüche 3 bis 5, **dadurch gekennzeichnet, dass** der Umrichter (E) ist ein drei Phasen Umrichter, und dass eine Phase mit einem Zwischenpunkt verbunden ist.

8. Installation gemäß Anspruch 7, **dadurch gekennzeichnet, dass** die Widerstände weißten eine erste Gruppe von Widerstände zwischen dem positiven Pol (L1) des Netzes und der Zwischenpunkt (L3), und eine zweite Gruppe von Widerstände zwischen dem negativen Pol (L2) des Netzes and der Zwischenpunkt (L3) auf.

9. Installation gemäß Anspruch 7 oder 8, **dadurch gekennzeichnet, dass** bei dem Zwischenpunkt (L3) des Gleichstromnetzes wenigstens zwei Steuerhalbleiter (13+, 14+, 13- und 14-) verbunden sind, die jeweils mit wenigstens einem Widerstand (11+, 12+, 11- und 12-) in Verbindung stehen, welche Widerstände paarweise mit zwei Polen des Netzes (L1, L2) verbunden sind.
